Europäisches Patentamt

European Patent Office

Office européen des brevets

(19)

(11) **EP 0 654 013 B1**

(12) **FASCICULE DE BREVET EUROPEEN**

(45) Date de publication et mention
de la délivrance du brevet:
**09.10.1996 Bulletin 1996/41**

(21) Numéro de dépôt: **94913673.3**

(22) Date de dépôt: **21.04.1994**

(51) Int Cl.6: **C01G 49/10**

(86) Numéro de dépôt international:
**PCT/FR94/00449**

(87) Numéro de publication internationale:
**WO 94/26667 (24.11.1994 Gazette 1994/26)**

(54) **PROCEDE DE PREPARATION DU CHLORURE FERRIQUE**

VERFAHREN ZUR HERSTELLUNG VON EISENCHLORID

PROCESS FOR THE PREPARATION OF FERRIC CHLORIDE

(84) Etats contractants désignés:
**AT BE CH DE DK ES FR GB GR IE IT LI LU NL PT
SE**

(30) Priorité: **07.05.1993 FR 9305535**

(43) Date de publication de la demande:
**24.05.1995 Bulletin 1995/21**

(73) Titulaire: **ELF ATOCHEM S.A.
92800 Puteaux (FR)**

(72) Inventeurs:
• **MURPHY, John-David
F-69001 Lyon (FR)**
• **CAILLARD, Pierre
F-69110 Sainte-Foy-les-Lyon (FR)**
• **CLAIR, René
F-69600 Oullins (FR)**

(56) Documents cités:
**EP-A- 0 340 071          US-A- 3 682 592**

• **CHEMICAL ABSTRACTS, vol. 85, no. 22, 29
Novembre 1976, Columbus, Ohio, US; abstract
no. 162808b, page 164**
• **DATABASE WPI Week 9115, Derwent
Publications Ltd., London, GB; AN 91-104822 &
JP,A,3 045 517 (TOA GOSEI CHEM IND LTD) 27
Février 1991**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un procédé de préparation de chlorure ferrique et plus particulièrement du chlorure ferrique en solution aqueuse concentrée qu'on utilise comme agent floculant dans le traitement des eaux.

Le procédé classique de fabrication de chlorure ferrique en solution comprend dans un premier temps l'attaque du fer par l'HCl menant à la formation de chlorure ferreux :

$$Fe + 2HCl \Rightarrow FeCl_2 + H_2$$

Ensuite, le chlorure ferreux ainsi obtenu est converti en chlorure ferrique par chloration :

$$FeCl_2 + 1/2Cl_2 \Rightarrow FeCl_3$$

La concentration du chlorure ferrique est de 35 à 45 % en poids.

Ce procédé est décrit dans les brevets européens EP 340069, EP 340070 et EP 340071 au nom de la demanderesse.

On peut aussi récupérer des solutions de décapage, ces solutions sont constituées de chlorure ferreux dilué et d'acide chlorhydrique. Il n'est pas possible de concentrer les solutions de chlorure ferrique puisqu'elles se décomposent quand on les chauffe. Il faut donc chlorer des solutions concentrées de chlorure. Par exemple, pour obtenir une solution à 40 % en poids de chlorure ferrique, il faut partir d'une solution à 34,25 % de chlorure ferreux si on n'ajoute que du chlore. Il est nécessaire de détruire d'abord l'acide chlorhydrique par du fer en poudre, de le concentrer puis le chlorer, à l'aide de chlore gazeux en chlorure ferrique. Ce procédé est décrit dans le brevet US 4,066,748. Le brevet US 2,096,855 décrit une préparation du chlorure ferrique à partir de fer et de chlore sans utiliser d'acide chlorhydrique. Le chlorure ferreux réagit avec le chlore gazeux pour donner du chlorure ferrique, une partie est recyclée pour attaquer le fer selon la réaction :

$$Fe + 2FeCl_3 \Rightarrow 3FeCl_2$$

Tous ces procédés nécessitent du chlore gazeux.

La présente invention conceme un procédé de préparation du chlorure ferrique en utilisant du fer et seulement de l'acide chlorhydrique comme source de chlore. L'acide chlorhydrique est un sous produit de nombreuses synthèses organiques ; de plus, il est plus facile à stocker et à manipuler que le chlore gazeux ou liquide.

Le principe de l'invention est de convertir le chlorure ferreux en chlorure ferrique par oxychloration avec l'HCl et l'O$_2$ ou l'air:

$$3FeCl_2 + 3HCl + 3/4O_2 \Rightarrow 3FeCl_3 + 3/2H_2O$$

2 moles de chlorure ferrique étant recyclées pour convertir le fer en chlorure ferreux.

Selon la réaction

$$Fe + 2FeCl_3 \Rightarrow 3FeCl_2.$$

Le principe de la réaction d'oxychloration du chlorure ferreux par l'acide chlorhydrique et l'oxygène est connu, mais pas dans le but de faire du chlorure ferrique apte au traitement des eaux.

Par exemple le brevet US 3,682,592 décrit le traitement des solutions de décapage qui contiennent du chlorure ferreux, de l'acide chlorhydrique et de nombreuses impuretés. La solution obtenue après l'oxychloration se décompose au dessus de 250° F pour donner de l'oxyde de fer et de l'acide chlorhydrique gazeux. On absorbe ensuite cet acide chlorhydrique par l'eau pour faire une nouvelle solution de décapage. On a ainsi récupéré presque complètement le chlore contenu dans la solution de décapage usagée. La réaction se fait de préférence en présence de catalyseurs tels que les chlorures de cuivre et d'ammonium et la concentration de chlorure ferreux à oxychlorer est de 22 % en poids. Ce qui n'a rien à voir avec le but de la présente invention dans laquelle la solution de chlorure ferreux doit être la plus pure possible et être assez concentrée pour que la solution de chlorure ferrique soit entre 35 et 45 % en poids. L'oxychloration des solutions de décapage ne permet donc pas de préparer du chlorure ferrique de pureté et de concentration suffisante pour le traitement des eaux.

L'art antérieur US 4,066,748 enseigne qu'il faut d'abord éliminer l'acide chlorhydrique des solutions de décapage, les concentrer puis les chlorer pour obtenir du chlorure ferrique apte au traitement des eaux.

L'objet de l'invention est un procédé de préparation du chlorure ferrique à partir d'acide chlorhydrique et de fer caractérisé en ce que :

a) on met en contact du chlorure ferreux avec de l'acide chlorhydrique et de l'oxygène jusqu'à disparition de l'essentiel de l'acide chlorhydrique,
b) une partie (i) de la solution obtenue en a) est mise en contact avec du fer pour convertir le chlorure ferrique et le fer en chlorure ferreux, cette solution est recyclée à l'étape a),
c) l'autre partie (ii) de la solution obtenue en a) constituée essentiellement de chlorure ferrique et qui peut contenir du chlorure ferreux est éventuellement mise en contact avec de l'oxygène et une quantité suffisante d'acide chlorhydrique pour convertir le chlorure ferreux en chlorure ferrique.

Par "oxygène" on entend aussi de l'air, de l'air enrichi en oxygène ou un gaz contenant de l'oxygène.

Le chlorure ferreux est converti en du chlorure ferrique par oxydation en milieu HCl avec de l'O$_2$ ou l'air:

$$3FeCl_2 + 3HCl + 3/4O_2 = 3FeCL_3 + 3/2H_2O$$

L'oxydation peut avoir lieu à des pressions de 1 à 20 bars absolus. Lorsque l'air est utilisé, il est préférable d'utiliser les pressions les plus élevées pour obtenir une forte pression partielle de l'oxygène.

L'oxygène ou l'air utilisé sont avantageusement bien dispersés dans la solution afin d'assurer une grande surface de contact entre les deux phases, par exemple par un système d'agitation rapide.

La température optimale de l'oxydation dépend de la pression utilisée. A la pression atmosphérique la température serait préférablement de 90 à 100° C. A des pressions plus élevées la température peut être augmentée jusqu'à 150° C. Des températures plus basses peuvent être utilisées mais elles diminuent la vitesse de réaction.

Dans l'étape a), on peut ajuster la quantité d'acide chlorhydrique pour apporter le chlore nécessaire à la conversion du chlorure ferreux en chlorure ferrique. Il est préférable d'avoir converti tout l'acide chlorhydrique en fin de l'étape a) pour que la solution de chlorure ferrique utilisée dans l'étape b) ne dégage pas d'hydrogène par réaction avec le fer.

La vitesse de l'oxydation ayant une dépendance de l'ordre de 2 en rapport avec la concentration en chlorure ferreux, il est préférable de faire la conversion en deux, voire trois étapes, pour limiter le volume des réacteurs.

Si en fin d'étape a) il reste du chlorure ferreux non converti en chlorure ferrique, on effectue dans l'étape c) une autre oxychloration.

La quantité d'acide chlorhydrique est ajustée pour obtenir un chlorure ferrique exempt de chlorure ferreux et d'acide chlorhydrique.

L'attaque du fer est faite dans l'étape b) par du chlorure ferrique en solution recyclée de l'étape a). Elle obéit à la réaction suivante :

$$Fe + 2FeCl_3 \Rightarrow 3FeCl_2$$

Le chlorure ferreux est donc obtenu sans dégagement d'hydrogène et donc sans entraînement de vésicules, par un gaz.

L'attaque du fer est favorisée par un température élevée, une forte concentration de chlorure ferrique et une grande surface du fer.

La température de l'attaque peut être comprise entre 20 et 100° C. Les températures les plus élevées favorisent la vitesse de l'attaque mais donnent de fortes tensions de vapeur d'eau qui peuvent conduire à l'entraînement de vésicules. La température de l'attaque est préférablement comprise entre 40 et 70° C.

Avantageusement la concentration du fer à la sortie du réacteur d'attaque ne dépasse pas la solubilité du chlorure ferreux à la température opératoire. Par conséquent, la concentration du chlorure ferrique introduit dans le réacteur d'attaque serait de 30 à 45 % en poids et de préférence de 35 à 40 % pour une température entre 40 et 70 °C.

Avant d'envoyer la solution du chlorure ferreux vers l'étape a), il est avantageux de la filtrer pour éliminer les fines particules de fer éventuellement présentes en suspension. Ces fines particules de fer pourraient réagir avec de l'HCl introduit lors de l'oxydation et conduire à la formation d'hydrogène provoquant un risque d'explosion au contact avec de l'oxygène. La filtration permet également d'éliminer des impuretés qui peuvent être présentes en suspension.

## *EXEMPLES*

## Exemple 1

Un réacteur de 1 litre est chargé de 500 g de fer sous forme de plaques d'environ 2-3 cm. Ceci correspond à un volume de 400 cm$^3$. Le réacteur est chauffé à une température de 60°C par circulation d'un fluide caloporteur dans la double enveloppe du réacteur.

Ensuite, 700 g de FeCl$^3$ de concentration 35 % en poids (environ 500 cm$^3$) sont introduits dans le réacteur et son mis en circulation à travers le réacteur à un débit de 8 litres/h, à l'aide d'une pompe peristaltique.

Cette opération est réalisée en batch pendant 1 heure. Des échantillons de la solution sont pris au cours de la réaction pour analyse et les taux de conversion de FeCl$_3$ en FeCl$_2$ calculés. Les résultats suivants sont obtenus :

| Temps (min) | Taux de conversion (%) |
|---|---|
| 5 | 54 |
| 15 | 83 |
| 20 | 93 |
| 30 | 96 |
| 60 | 99,5 |

La réaction est donc quasiment complète après 1 heure. Le chlorure ferreux est obtenu à une concentration de 39 % en poids.

## Exemple 2

L'exemple 1 est répété mais cette fois à une température de 95°C et avec une solution de FeCl$_3$ de 41 % en poids.

Les résultats suivants sont obtenus :

| Temps (min) | Taux de conversion (%) |
|---|---|
| 5 | 90 |

(suite)

| Temps (min) | Taux de conversion (%) |
|---|---|
| 15 | 98,5 |
| 30 | 99,5 |
| 60 | 99,9 |

La réaction est beaucoup plus rapide qu'à 60°C ; la réaction est terminée après environ 15 min. Le chlore ferreux est obtenu à une concentration de 45 % en poids et subi une légère cristallisation à température ambiante.

### Exemple 3

Le chlorure ferreux obtenu après l'exemple 2 est filtré à 80°C sur une précouche de clarcel pour éliminer les fines particules en suspension. Le filtrat est récupéré et 700 g (500 cm$^3$) sont chargés dans un deuxième réacteur. Ce réacteur est muni d'une double enveloppe, d'un fond en verre fritté, d'une arrivée de gaz en bas du réacteur, d'un condenseur à eau au-dessus du réacteur et d'un thermocouple immergé dans le milieu réactionnel. Le réacteur est chauffé par circulation d'un fluide caloporteur dans la double enveloppe.

Au chlorure ferrique sont ajoutés 245 g d'HCl à 37 %. La solution obtenue a une concentration en fer de 14,5 %.

L'oxygène a une pression de 1,1 bar et est alimenté à un débit de 100 l/h en pied du réacteur. Il passe à travers le verre fritté qui permet une bonne dispersion dans la solution du chlorure ferreux. Le réacteur est maintenu à une température de 95°C.

L'oxydation du FeCl$_2$ est effectuée en batch et des échantillons sont pris pour analyse au cours de la réaction et les taux de conversion calculés. Les résultats obtenus sont les suivants :

| Temps (min) | Taux de conversion (%) |
|---|---|
| 5 | 52,5 |
| 30 | 70 |
| 60 | 83 |
| 120 | 91 |
| 240 | 96 |
| 360 | 98 |
| 480 | 99 |

La solution du FeCl$_3$ obtenue a une concentration de 42 %.

### Exemple 4

L'exemple 3 est répété mais cette fois avec une solution moins concentrée en FeCl$_2$ (20 %) à laquelle en ajoute 106 g d'HCl à 37 %.
Les résultats suivants sont obtenus :

Les résultats suivants sont obtenus :

| Temps (min) | Taux de conversion (%) |
|---|---|
| 30 | 54,5 |
| 60 | 70,5 |
| 120 | 82,5 |
| 240 | 90,5 |
| 360 | 93,5 |
| 480 | 95 |

La vitesse d'oxydation est donc beaucoup plus lente dans une solution diluée.

### Revendications

1. Procédé de préparation du chlorure ferrique à partir d'acide chlorhydrique et de fer caractérisé en ce que :

    a) on met en contact du chlorure ferreux avec de l'acide chlorhydrique et de l'oxygène jusqu'à disparition de l'essentiel de l'acide chlorhydrique,

    b) une partie (i) de la solution obtenue en a) est mise en contact avec du fer pour convertir le chlorure ferrique et le fer en chlorure ferreux, cette solution est recyclée à l'étape a),

    c) l'autre partie (ii) de la solution obtenue en a) constituée essentiellement de chlorure ferrique et qui peut contenir du chlorure ferreux est éventuellement mise en contact avec de l'oxygène et une quantité suffisante d'acide chlorhydrique pour convertir le chlorure ferreux en chlorure ferrique.

### Patentansprüche

1. Verfahren zur Herstellung von Eisen(III)-chlorid, ausgehend von Salzsäure und Eisen, dadurch gekennzeichnet, daß

    a) man Eisen(II)-chlorid mit Salzsäure und Sauerstoff in Kontakt bringt, bis die Salzsäure im wesentlichen verschwunden ist,

    b) ein Teil (i) der unter a) erhaltenen Lösung mit Eisen in Kontakt gebracht wird, um das Eisen (III)-chlorid und das Eisen in Eisen(II)-chlorid zu überführen; diese Lösung wird in Schritt a) wieder eingesetzt,

    c) der andere Teil (ii) der unter a) erhaltenen Lösung, der im wesentlichen aus Eisen(III)-chlorid besteht und Eisen(II)-chlorid enthalten kann, gegebenenfalls mit Sauerstoff und einer ausreichenden Menge Salzsäure in Kontakt gebracht wird, um das Eisen(II)-chlorid in Eisen(III)-chlorid zu überführen.

## Claims

1. Process for the preparation of ferric chloride from hydrochloric acid and iron, characterized in that:

   a) ferrous chloride is brought into contact with hydrochloric acid and oxygen until almost all of the hydrochloric acid has disappeared,
   b) a portion (i) of the solution obtained in a) is brought into contact with iron in order to convert the ferric chloride and the iron to ferrous chloride, and this solution is recycled to step a),
   c) the other portion (ii) of the solution obtained in a), which consists essentially of ferric chloride and which may contain ferrous chloride, is optionally brought into contact with oxygen and a sufficient quantity of hydrochloric acid to convert the ferrous chloride to ferric chloride.